# EUROPÄISCHE PATENTSCHRIFT

(11) **EP 1 466 688 B1**
(45) Veröffentlichungstag und Bekanntmachung des Hinweises auf die Patenterteilung: **27.07.2005**
(21) Anmeldenummer: 03008133.5
(22) Anmeldetag: 08.04.2003
(51) Int. Cl.: B23D 47/00

(54) **Kreissägemaschine**
Circular saw
Scie circulaire

(43) Veröffentlichungstag der Anmeldung: 13.10.2004
(73) Patentinhaber: KEURO Besitz GmbH & Co. EDV-Dienstleistungs KG, 77855 Achern (DE)
(72) Erfinder: Boss, Stefan, Dipl.-Ing., 72574 Bad Urach (DE); Frietsch, Klaus, Dipl.-Ing., 77836 Rheinmünster (DE); Heydt, Fritz, Dr.-Ing, 72622 Nürtingen (DE)
(74) Vertreter: Kaiser, Magnus

(56) Entgegenhaltungen:
- US-A- 378 513
- US-A- 2 842 908
- US-A- 5 497 684

## Beschreibung

Die Erfindung betrifft eine Kreissägemaschine nach dem Oberbegriff des Anspruchs 1. Demnach handelt es sich um eine Kreissägemaschine mit einem Sägeblatt, einer Antriebswelle für das Sägeblatt sowie mit mindestens einer hinteren und einer vorderen Sägeblattführung für die beiden Seitenflächen des Sägeblatts. Die Sägeblattführungen weisen jeweils mindestens eine an die jeweilige Seitenfläche des Sägeblattes anzulegende Kontaktfläche auf, und das Sägeblatt ist auswechselbar gehalten, wozu die vordere Sägeblattführung vom Sägeblatt entfernbar oder wegschwenkbar ausgebildet ist.

Die US-A-5,497,684 betrifft eine solche Kreissägemaschine. Hier sollen durch eine geeignete Führung des Sägeblatts axiale Schwingungen gedämpft werden, die zu einer Verbreiterung der Schnittfuge beim Sägen eines Holzwerkstoffs führen. Das Sägeblatt steht, wie bei der Bearbeitung von Holzwerkstoffen üblich, fest, während das zu sägende Holzwerkstück gegenüber dem Sägeblatt bewegt wird. Die Sägeblattführungen sind auf wegschwenkbaren bzw. wegziehbaren Halterungen befestigt, um ein Auswechseln eines abgenutzten Sägeblatts gegen ein identisches, neues Sägeblatt zu ermöglichen, ohne danach die Sägeblattführungen neu einjustieren zu müssen.

Die US-A-378,513 offenbart eine Sägeblattführung für eine Kreissäge zum Sägen von Holzwerkstoffen, die auf den Durchmesser und die Dicke des montierten Sägeblatts in einem bestimmten Bereich stufenlos einstellbar bzw. für bestmögliche Ergebnisse justierbar ist.

In der Großserien-Herstellung von Metallteilen werden demgegenüber Kreissägemaschinen verwendet, bei denen das Sägeblatt mitsamt der Antriebswelle in der Rotationsebene des Sägeblatts für den Sägevorgang vor- und zurückbewegbar gehalten ist. Sägeblattführungen der in den beiden eben genannten Schriften beschriebenen Art sind für solche Kreissägemaschinen daher nicht verwendbar. Dennoch ist eine Führung des Sägeblatts von Kreissägemaschinen zur Großserien-Herstellung von Metallteilen unerlässlich:

In der Großserien-Herstellung von Metallteilen werden meist Stahlstangen in einzelne Abschnitte gesägt, an die höchste Genauigkeitsanforderungen in engen Toleranzen bezüglich der Abschnittslänge, der Winkeligkeit, Parallelität und Oberflächenbeschaffenheit der Schnittflächen gestellt werden. Die Anforderungen an die Genauigkeit des Schnittes bei Kreissägemaschinen sind also besonders hoch. Durch Qualitätssicherungsmaßnahmen, wie beispielsweise hinsichtlich der Eigenschaft "Maschinenfähigkeit" der Sägeabschnitte werden die noch hinzunehmenden Toleranzbereiche der Werkstückmaße weiter eingeschränkt.

Bekanntermaßen ist nun das Sägeblatt die instabilste Komponente einer Kreissägemaschine. Insbesondere bei zunehmenden Verschleiß des Sägeblatts neigt dieses beim Sägen zum Schrägziehen. Ferner führen auch Axialschwingungen des Sägeblatts zu mitunter ungenauen Abmessungen der gesägten Rohlinge.

Aus diesem Grund ist es bereits seit einiger Zeit üblich, die beiden Seitenflächen des Sägeblatts möglichst in der Nähe der Zähne mittels einer vorderen und einer hinteren Sägeblattführung zu führen, um ein Schrägziehen und Schwingungsbewegungen zu vermeiden. Naturgemäß muss diese Sägeblattführung stabil und hochgenau ausgebildet sein, um den gewünschten Effekt erzielen zu können. Darüber hinaus muss, um eine gewisse Verschleißfestigkeit zu erzielen, jeweils mindestens eine Kontaktfläche für die entsprechende Seitenfläche des Sägeblatts vorgesehen sein, welche mit Hartmetallauflagen oder mit Keramikauflagen versehen ist. Das Vermindern von Verschleißerscheinungen dient letztendlich wiederum der Genauigkeit der Sägeblattführung und somit des gesägten Rohlings.

Nun ist es oft wünschenswert, unterschiedliche Werkstückdurchmesser zu sägen. Dies ist mit ein und demselben Sägeblatt allerdings nur in begrenztem Umfang möglich. Denn unterschiedlich große Werkstücke brauchen für einen sauberen Schnitt in der Regel unterschiedliche Sägeblattdurchmesser mit verschiedenen Zahnteilungen. Aufgrund der oben beschriebenen Anforderungen an die Toleranzen der gesägten Rohlinge ist bislang jedoch insbesondere die Sägeblattführung genau auf ein bestimmtes Sägeblatt ausgelegt, so dass man mehrere Kreissägemaschinen braucht, wenn man unterschiedliche Werkstückdurchmesser sägen will.

Ausgehend von diesem Stand der Technik liegt der Erfindung die Aufgabe zugrunde, eine Kreissägemaschine der eingangs genannten Art so weiterzubilden, dass sie auch zur Herstellung von Metallteilen geeignet ist und gleichzeitig ein Umrüsten derselben für unterschiedliche Werkstückdurchmesser leicht möglich wird.

Diese Aufgabe ist durch eine Kreissägemaschine mit den Merkmalen des Anspruchs 1 gelöst. Vorteilhafte Ausgestaltungen und Weiterbildungen der Erfindung ergeben sich aus den Ansprüchen 2 bis 7.

Bei einer Kreissägemaschine nach der Erfindung ist die vordere Sägeblattführung vom Sägeblatt entfernbar oder wegschwenkbar ausgebildet sowie das Sägeblatt selbst auswechselbar gehalten. Hierbei ist der radiale Abstand zwischen den Kontaktflächen der Sägeblattführungen und der Antriebswelle jeweils veränderbar, und zwar an die unterschiedlichen Sägeblattdurchmesser anpassbar.

Die Veränderbarkeit des radialen Abstandes zwischen den Kontaktflächen der Sägeblattführungen und der Antriebswelle ermöglicht eine Anpassung der Sägeblattführungen an unterschiedliche Sägeblattdurchmesser, wobei die Entfernbarkeit bzw. Wegschwenkbarkeit der vorderen Sägeblattführung ein Auswechseln des Sägeblatts gegen ein solches mit anderem Durchmesser möglich macht.

Da Sägeblätter mit unterschiedlichen Durchmessern in der Regel auch unterschiedliche Sägeblattdicken aufweisen, ist nach einer bevorzugten Ausgestaltung der Erfindung der Abstand zwischen der hinteren und der vorderen Sägeblattführung einstellbar.

Die Erfindung umfasst zwei Alternativen:

Die vordere Sägeblattführung kann als Platte ausgebildet sein, wobei mehrere solcher plattenförmigen Sägeblattführungen vorgesehen sind, welche gegeneinander auswechselbar sind. Sofern die plattenförmigen Sägeblattführungen mit unterschiedlichen Abständen zwischen den Kontaktflächen und der Antriebswelle versehen sind, kann dann ganz einfach das Sägeblatt nach Abnehmen der vorderen Sägeblattführung ausgetauscht und wieder mit einer exakt auf dieses Sägeblatt abgestimmten vorderen Sägeblattführung versehen werden.

Vorteilhaft ist es natürlich, wenn auch die hintere Sägeblattführung aus mehreren, gegeneinander auswechselbaren Platten mit unterschiedlichen Abständen zwischen den Kontaktflächen und der Antriebswelle auswählbar ist. Wenn man stattdessen nicht die gesamte hintere Sägeblattführung herausnehmen und austauschen will, bietet es Vorteile, wenn die Kontaktflächen an der hinteren Sägeblattführung in Ihrem Abstand zur Antriebswelle verstellbar sind. Dies kann beispielsweise ganz einfach dadurch geschehen, dass die Kontaktflächen mit ihren Halterungen in entsprechenden Ausnehmungen der hinteren Sägeblattführung sitzen und beim Sägeblattwechsel aus diesen Ausnehmungen herausgenommen und in andere, dem neuen Sägeblatt angepassten Ausnehmungen eingesetzt werden.

Die zweite erfindungsgemäße Alternative besteht darin, die Kontaktflächen der Sägeblattführungen in ihrem radialen Abstand zur Antriebswelle verstellbar auszugestalten.

Hinsichtlich der Bedienungssicherheit hat es sich als besonders vorteilhaft herausgestellt, dass die Kontaktflächen an einer parallel zur Sägeblattebene verschwenkbaren Halterung an der Sägeblattführung angebracht werden, wobei diese Halterung in vorgegebenen Schwenkwinkeln festlegbar ist. Eine Fehlbedienung kann so sehr einfach ausgeschlossen werden.

Nach dieser zweiten Möglichkeit, die Erfindung zu verwirklichen, ist es nicht nötig, eine entsprechend schwere plattenförmige vordere Sägeblattführung wegzunehmen, um sie gegen eine andere auszutauschen. Hier wird vielmehr die Sägeblattführung im wesentlichen so belassen, wie sie ist; lediglich die Kontaktflächen werden verstellt, um eine Anpassung der gesamten Sägeblattführung an unterschiedliche Sägeblattdurchmesser zu erhalten.

Um den Sägeblattwechsel zu ermöglichen und gegenüber auswechselbaren Sägeblattführungsplatten deutliche Erleichterungen zu schaffen, kann die vordere Sägeblattführung mittels eines Scharniers vom Sägeblatt wegschwenkbar ausgebildet sein, wobei die Schwenkachse des Scharniers mittels einer exzentrischen Lagerung verstellbar ist, um den Abstand zwischen der hinteren und der vorderen Sägeblattführung zur Anpassung an unterschiedliche Dicken des Sägeblatts einzustellen.

Da es nicht optimal ist, die vordere Sägeblattführung nur an einem Scharnier zu haltern, ist ein weiterer, vom Scharnier beabstandeter Befestigungspunkt für die vordere Sägeblattführung vorzugsweise vorgesehen. Dies ist vorliegend umso wichtiger, da eine strenge Parallelität der vorderen und der hinteren Sägeblattführung notwendig ist, um die vorgegebenen engen Toleranzen einhalten zu können. Hierzu hat es sich als zweckmäßig herausgestellt, die vordere und die hintere Sägeblattführung an einem vom Scharnier beabstandeten Punkt neben dem Sägeblatt über ein Distanzstück miteinander zu verbinden. Das Distanzstück kann hierbei auswechselbar oder verstellbar ausgebildet sein.

Wiederum im Sinne der Bedienungssicherheit kann das Distanzstück so ausgebildet sein, dass es je nach Einbauorientierung einen vorbestimmten weiteren oder einen entsprechend engeren Abstand zwischen der vorderen und der hinteren Sägeblattführung verursacht.

Zwei Ausführungsbeispiele der Erfindung werden im Folgenden anhand der beigefügten Zeichnungen näher erläutert und beschrieben. Es zeigen:
- Figur 1: eine schematische Darstellung der interessierenden Teile einer erfindungsgemäßen Kreissägemaschine gemäß einem ersten Ausführungsbeispiel;
- Figur 2: eine Darstellung wie Figur 1, beim Auswechseln des Sägeblatts;
- Figur 3: eine schematische Darstellung entsprechend Figur 1, jedoch eines anderen Ausführungsbeispiels; ,
- Figur 4: eine Darstellung wie Figur 3, jedoch mit einem kleineren Sägeblatt;
- Figur 5: die Kreissägemaschine aus den Figuren 3 und 4 beim Sägeblattwechsel;
- Figur 6: eine schematische Detaildarstellung zur Funktionsweise des Distanzstücks beim Ausführungsbeispiel der Figuren 3 bis 5;
- Figur 7: eine Darstellung entsprechend Figur 6;
- Figur 8: eine schematische Darstellung des Exzenterscharniers bei der in den Figuren 3 bis 5 beschriebenen Kreissägemaschine;
- Figur 9: eine Darstellung entsprechend Figur 8.

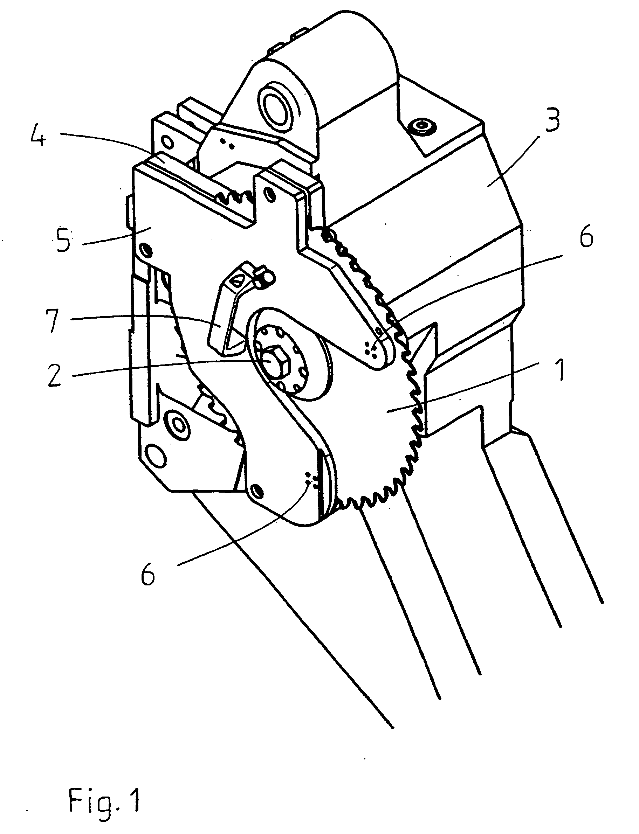

Der in Figur 1 gezeigte Teil einer erfindungsgemäßen Kreissägemaschine besteht im wesentlichen aus einem Sägeblatt 1, das auf einer Antriebswelle 2 auf einem Getriebegehäuse 3 sitzt. Eine hintere 4 und eine vordere Sägeblattführung 5 tragen jeweils zwei Kontaktflächen 6, die gleitend an den Seitenflächen des Sägeblatts 1 anliegen und eine genaue Führung desselben beim Sägen sicherstellen. Der gesamte hier dargestellte Funktionsblock der Kreissägemaschine kann für den Sägevorgang in der Rotationsebene des Sägeblatts in einer Schwenkbewegung vor und zurück bewegt werden.

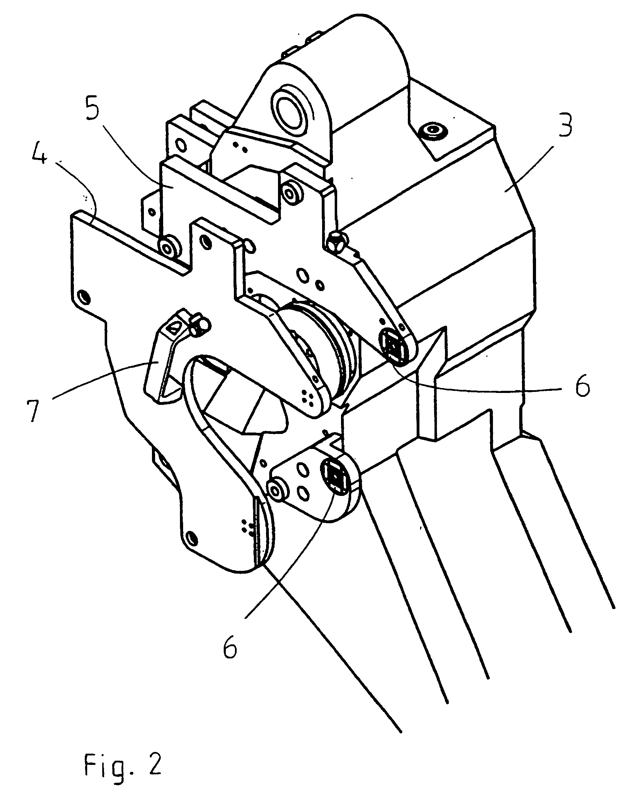

Die in diesem ersten Ausführungsbeispiel eingesetzten Sägeblattführungen 4, 5 sind, wie Figur 2 deutlich zeigt, plattenförmig und auswechselbar ausgebildet. Insbesondere die vordere Sägeblattführung 4 besteht aus einer auswechselbaren Platte, wobei ein Handgriff 7 das Auswechseln derselben erleichtert. Die hintere Sägeblattführung 5 besteht genau genommen aus zwei Plattenteilen, die jeweils eine Kontaktfläche 6 tragen. Die Kontaktflächen 6 bestehen, wie hier deutlich sichtbar, aus vier flächig angeordneten Hartmetallplatten zur Anlage an das hier entfernte Sägeblatt 1. Bei der hinteren Sägeblattführung 5 wird nur das größere Plattenteil ausgewechselt; das kleinere Plattenteil wird an den dort vorgesehenen Befestigungen einfach umgesteckt, so dass die entsprechende Kontaktfläche 6 radial weiter innen oder weiter außen zu liegen kommt, um die notwendige Anpassung an die unterschiedlichen Sägeblattdurchmesser vorzunehmen.

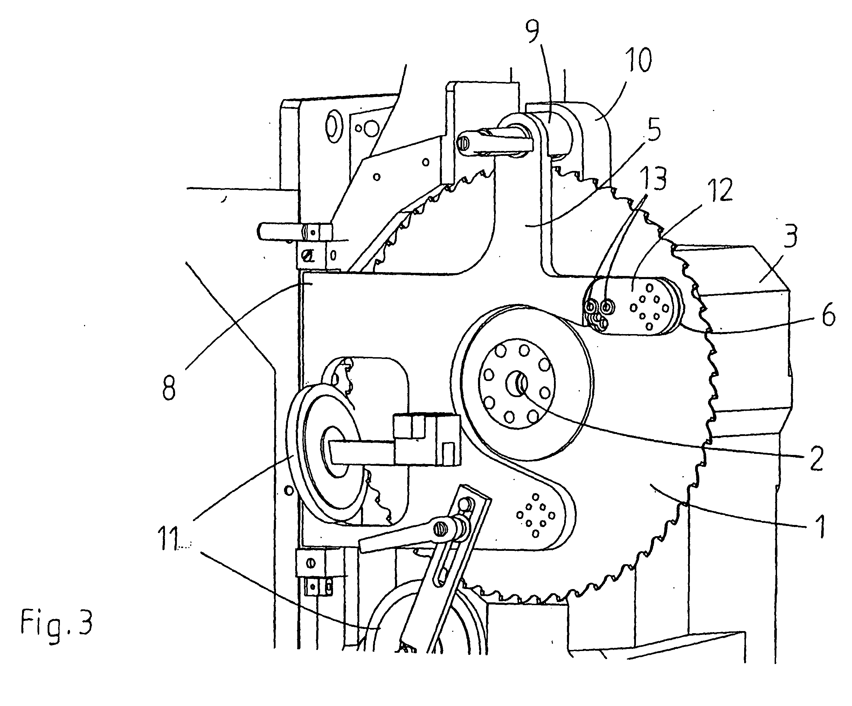

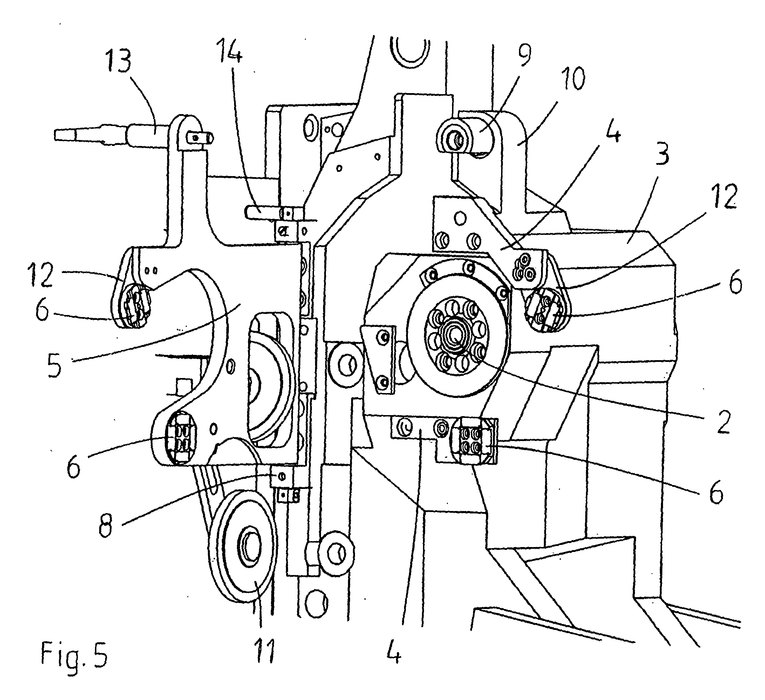

Figur 3 zeigt ein zweites Ausführungsbeispiel einer erfindungsgemäßen Kreissägemaschine. Hier ist wiederum ein Sägeblatt 1 über eine Antriebswelle 2 mit einem Getriebegehäuse 3 verbunden, welches zusammen mit dem Sägeblatt 1 vor und zurück bewegt werden kann, um eine Sägebewegung durchzuführen. Eine vordere Sägeblattführung 5 ist gegenüber der vorderen Sägeblattführung des ersten Ausführungsbeispiels deutlich leichter gebaut. Sie ist auch nicht auswechselbar, sondern für einen Austausch des Sägeblatts 1, wie Figur 5 zeigt, um ein Scharnier 8 verschwenkbar. Vom Scharnier 8 beabstandet, ist die vordere Sägeblattführung 5 über ein Distanzstück 9 an einer Haltevorrichtung 10 am Getriebegehäuse 3 befestigt. Hierdurch wird eine hohe Stabilität der vorderen Sägeblattführung 5 sowie die erforderliche Parallelität zwischen der vorderen 5 und der hinteren Sägeblattführung 4 gewährleistet. Zum Beseitigen der beim Sägen entstehenden Späne von den Zähnen des Sägeblatts 1 sind an der vorderen Sägeblattführung 5 noch zwei Späneräumbürsten 11 vorgesehen, die für die Erfindung jedoch nicht wichtig sind.

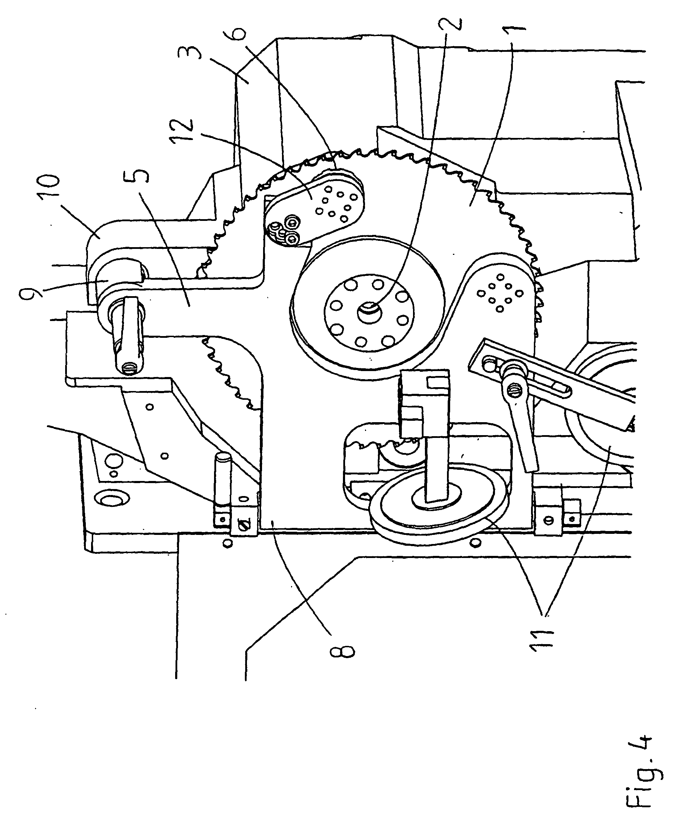

Im Vergleich der Figuren 3 und 4 wird am deutlichsten sichtbar, wie die Kontaktflächen 6 der vorderen Sägeblattführung 5 an unterschiedliche Durchmesser verschiedener eingesetzter Sägeblätter 1 angepasst werden kann. Die obere Kontaktfläche 6 sitzt hierzu auf einer Halterung 12, die lösbar oder zumindest schwenkbar an der vorderen Sägeblattführung 5 befestigt ist. Es sind hier drei Schwenkpositionen vorgesehen, die durch drei Bohrungen vorgegeben sind.

Durch Lösen der Befestigungsschrauben 13 und Entfernen der hinteren der beiden Schrauben kann die Halterung 12 verschwenkt und danach durch Anziehen der Befestigungsschrauben 13 wieder fixiert werden. Das Verschwenken bewirkt, wie anhand der Figuren 3 und 4 deutlich sichtbar, dass der radiale Abstand zwischen der entsprechenden Kontaktfläche 6 und der Antriebswelle 2 verändert wird. Bei einem großen Sägeblatt 1 (Figur 3) sitzt die Kontaktfläche 6 radial weiter außen, als im verschwenkten Zustand bei kleinen Sägeblättern 1 (Figur 4).

Figur 5 zeigt das zweite Ausführungsbeispiel mit aufgeklappter vorderer Sägeblattführung 5 und ohne Sägeblatt 1. Hierdurch ist die hintere Sägeblattführung 4 sichtbar, welche ebenfalls über eine Gleitfläche 6 verfügt, die mit einer Halterung 12 schwenkbar und somit in ihrer radialen Position auf dem Sägeblatt 1 einstellbar ausgebildet ist. Auch hier sind wiederum drei Schwenkwinkel vorgegeben, da Sägeblätter in der Regel in Normgrößen hergestellt werden und somit eine Vorgabe von an diese Normgrößen angepassten Schwenkwinkeln vorteilhaft ist. Die jeweils unten liegende Kontaktfläche 6 der hinteren 4 und vorderen Sägeblattführung 5 ist im dargestellten Ausführungsbeispiel nicht verstellbar, da es sich hier um eine Sägemaschine handelt, deren Sägeblatt zum Sägen in einer Schwenkbewegung vor und zurück bewegt wird und somit eine zu weit nach außen stehende untere Kontaktfläche 6 stören würde.

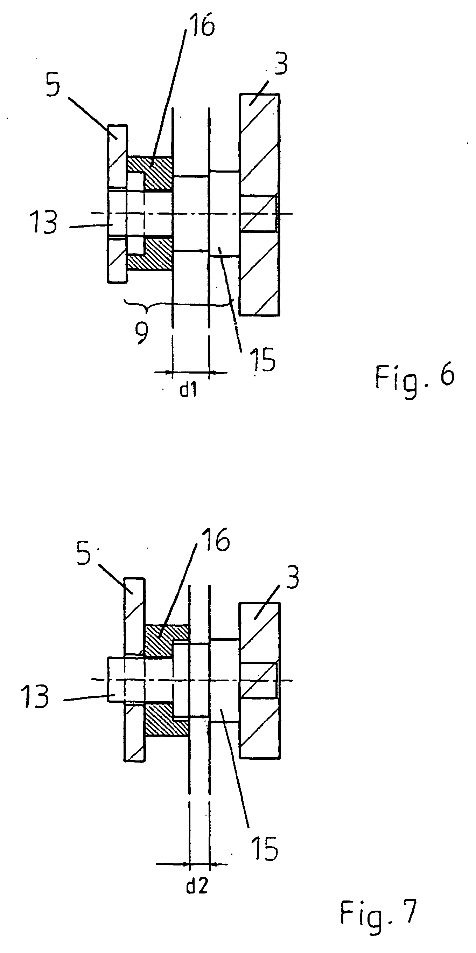

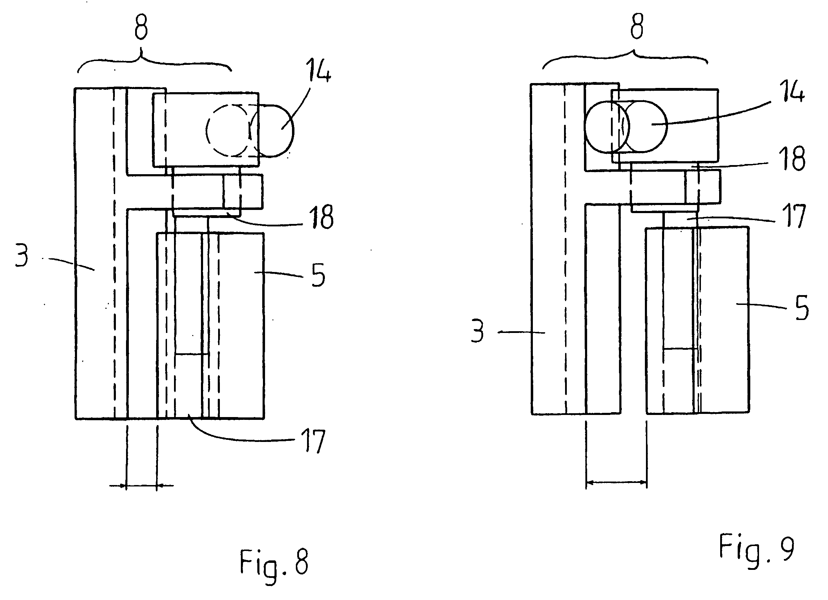

Die lösbare Verbindung der vorderen Sägeblattführung 5 mit der Haltevorrichtung 10 über das Distanzstück 9 mittels eines Befestigungsbolzens 13 ist in den Figuren 6 und 7 genauer dargestellt. Da Sägeblätter mit kleineren Radien im allgemeinen auch dünner sind als Sägeblätter mit größeren Radien, ist vorliegend außerdem eine Anpassung des Abstands zwischen der hinteren 4 und vorderen Sägeblattführung 5 zur Anpassung an unterschiedliche Sägeblattdicken vorgesehen. An der Stelle des Befestigungsbolzens 13 ist hierfür ein speziell ausgebildetes Distanzstück 9 vorgesehen, welches die Verstellung des Abstands zwischen der hinteren und der vorderen Sägeblattführung 4, 5 in zwei Stufen ermöglicht.

Figur 6 zeigt hierbei die Anordnung bei dickeren Sägeblättern: Das Distanzstück 9 besteht aus einem Distanzbolzen 15 und einer Distanzhülse 16, wobei die Distanzhülse 16 entfernt und in anderer Orientierung wieder aufgesetzt werden kann. Der Befestigungsbolzen 13 durchgreift die vordere Sägeblattführung 5, die Distanzhülse 16 sowie den Distanzbolzen 15 und wird im Getriebegehäuse 3 festgelegt. Wenn die Distanzhülse in der in Figur 6 gezeigten Orientierung eingebaut ist, trägt ihre gesamte Dicke zur Distanz zwischen dem Getriebegehäuse 3 und der vorderen Sägeblattführung 5 für eine größere Dicke d1 des Sägeblatts 1 bei. Soweit die Distanzhülse 16 jedoch wie in Figur 7 gezeigt in umgedrehter Orientierung eingebaut ist, sitzt der Distanzbolzen 15 in einer Ausnehmung in der Distanzhülse 16, so dass der Abstand zwischen der vorderen Sägeblattführung 5 und dem Getriebegehäuse 3 verringert wird für eine reduzierte Dicke d2 des Sägeblatts 1.

Um die Anpassung des Abstands zwischen der vorderen und der hinteren Sägeblattführung 4, 5 an unterschiedliche Sägeblattdicken vorzunehmen, reicht es jedoch nicht, das Distanzstück 9 länger oder kürzer auszugestalten. Vielmehr muss auch am Scharnier 8 eine Verstellung des genannten Abstands vorgesehen sein.

Wie dies vorliegend durchgeführt wird, ist in den Figuren 8 und 9 detailliert dargestellt. Diese zeigen das Scharnier 8, dessen Scharnierbolzen 17 über einen Exzenter 18 am Getriebegehäuse 3 befestigt ist. Der Exzenter 18 wird über einen Exzenterhebel 14 betätigt, welcher in den Figuren 3 bis 5 zu sehen ist. Hierzu wird der Exzenterhebel 14 von einer ersten in eine zweite Position verschwenkt, um den Scharnierbolzen 17 zur Anpassung an eine erste, geringe Sägeblattdicke näher an das Getriebegehäuse 3 heranzubringen (Figur 8) bzw. ihn zur Anpassung an eine zweite, größere Sägeblattdicke vom Getriebegehäuse 3 mehr zu beabstanden (Figur 9). Hier ist wiederum durch die beiden Positionen des Exzenterhebels 14 bereits vorgegeben, in welchem Maß der Exzenter 18 den Scharnierbolzen 17 jeweils verstellt, um eine exakte Parallelität der beiden Sägeblattführungen 4, 5 auch bei ungenauer Bedienung der Maschine sicherstellen zu können.

### Bezugszeichenliste

- 1: Sägeblatt
- 2: Antriebswelle
- 3: Getriebegehäuse
- 4: Sägeblattführung (hintere)
- 5: Sägeblattführung (vordere)
- 6: Kontaktflächen
- 7: Handgriff
- 8: Scharnier
- 9: Distanzstück
- 10: Haltevorrichtung
- 11: Späneräumbürsten
- 12: Halterung (für 6)
- 13: Befestigungsbolzen
- 14: Exzenterhebel
- 15: Distanzbolzen
- 16: Distanzhülse
- 17: Scharnierbolzen
- 18: Exzenter

## Patentansprüche

1. Kreissägemaschine mit einem Sägeblatt (1) und einer Antriebswelle (2) für das Sägeblatt (1) sowie mindestens einer hinteren (4) und mindestens einer vorderen Sägeblattführung (5) für die beiden Seitenflächen des Sägeblatts (1), wobei die Sägeblattführungen (4, 5) jeweils mindestens eine an die jeweilige Seitenfläche des Sägeblatts (1) anzulegende Kontaktfläche (6) aufweisen, und wobei die vordere Sägeblattführung (5) vom Sägeblatt (1) entfernbar oder wegschwenkbar ausgebildet sowie das Sägeblatt (1) selbst auswechselbar gehalten ist,
**dadurch gekennzeichnet,**
**dass** das Sägeblatt (1) mit der Antriebswelle (2) für den Sägevorgang in der Rotationsebene vor und zurück bewegbar gehalten ist, und dass der radiale Abstand zwischen den Kontaktflächen (6) der Sägeblattführungen (4, 5) und der Antriebswelle (2) jeweils veränderbar ist,
a) indem die vordere Sägeblattführung (5) aus mehreren, gegeneinander auswechselbaren Platten mit unterschiedlichen Abständen zwischen den Kontaktflächen (6) und der Antriebswelle (2) auswählbar ist, oder
b) indem wenigstens eine Kontaktfläche (6) zumindest einer Sägeblattführung (4, 5) an einer parallel zur Sägeblattebene verschwenkbaren, in vorgegebenen Schwenkwinkeln festlegbaren Halterung (12) an der Sägeblattführung (4, 5) angebracht ist.

2. Kreissägemaschine nach Anspruch 1,
**dadurch gekennzeichnet,**
**dass** der Abstand zwischen der hinteren (4) und der vorderen Sägeblattführung (5) zur Anpassung an unterschiedliche Dicken des Sägeblatts (1) einstellbar ist.

3. Kreissägemaschine nach Anspruch 1 gemäß Alternative a) oder Anspruch 2,
**dadurch gekennzeichnet,**
**dass** auch die hintere Sägeblattführung (4) zumindest teilweise aus mehreren, gegeneinander auswechselbaren Platten mit unterschiedlichen Abständen zwischen den Kontaktflächen (6) und der Antriebswelle (2) auswählbar ist.

4. Kreissägemaschine nach Anspruch 1 gemäß Alternative b) oder Anspruch 2,
**dadurch gekennzeichnet,**
**dass** die Kontaktflächen (6) an der hinteren Sägeblattführung (4) in ihrem radialen Abstand zur Antriebswelle (2) verstellbar sind.

5. Kreissägemaschine nach einem der Ansprüche 1 bis 4,
**dadurch gekennzeichnet,**
**dass** die vordere Sägeblattführung (5) mittels eines Scharniers (8) vom Sägeblatt (1) wegschwenkbar ausgebildet ist, wobei die Schwenkachse des Scharniers (8) mittels einer exzentrischen Lagerung verstellbar ist, um den Abstand zwischen der hinteren und der vorderen Sägeblattführung (4, 5) zur Anpassung an unterschiedliche Dicken des Sägeblatts (1) einzustellen.

6. Kreissägemaschine nach Anspruch 5,
**dadurch gekennzeichnet,**
**dass** die vordere Sägeblattführung (5) an einem vom Scharnier (8) beabstandeten Punkt neben dem Sägeblatt (1) über ein Distanzstück (9) mit der hinteren Sägeblattführung (4) oder einer relativ zu dieser starr ausgebildeten Haltevorrichtung (10) verbunden ist, wobei das Distanzstück (9) auswechselbar oder verstellbar ausgebildet ist.

7. Kreissägemaschine nach Anspruch 6,
**dadurch gekennzeichnet,**
**dass** das Distanzstück (9) so ausgebildet ist, dass es je nach Einbauorientierung einen vorbestimmten weiteren oder engeren Abstand zwischen der vorderen und der hinteren Sägeblattführung (4, 5) verursacht.

## Claims

1. Circular saw machine having a saw blade (1) and a drive shaft (2) for the saw blade (1) and having at least one rear saw blade guide (4) and at least one forward saw blade guide (5) for the two side faces of the saw blade (1), the saw blade guides (4, 5) each having at least one contact surface (6) to be applied to the respective side face of the saw blade (1), and the forward saw blade guide (5) being so configured that it can be removed or pivoted away from the saw blade (1), and the saw blade (1) itself being exchangeably mounted,
**characterised in that**
the saw blade (1) with the drive shaft (2) is mounted so that for the sawing operation it is movable back and forth in the plane of rotation, and the radial spacing between the contact surfaces (6) of the saw blade guides (4, 5) and the drive shaft (2) can be altered
a) by the forward saw blade guide (5) being selectable from a plurality of interchangeable plates having different spacings between the contact surfaces (6) and the drive shaft (2), or
b) by at least one contact surface (6) of at least one saw blade guide (4, 5) being mounted on the saw blade guide (4, 5) on a holding device (12) which is capable of being pivoted parallel to the plane of the saw blade and fixed at predetermined pivoted angles.

2. Circular saw machine according to claim 1,
**characterised in that**
the spacing between the rear saw blade guide (4) and the forward saw blade guide (5) is adjustable to match different thicknesses of saw blade (1).

3. Circular saw machine according to claim 1 in accordance with alternative a) or claim 2,
**characterised in that**
the rear saw blade guide (4) is, at least in part, also selectable from a plurality of interchangeable plates having different spacings between the contact surfaces (6) and the drive shaft (2).

4. Circular saw machine according to claim 1 in accordance with alternative b) or claim 2,
**characterised in that**
the contact surfaces (6) on the rear saw blade guide (4) are adjustable in respect of their radial spacing from the drive shaft (2).

5. Circular saw machine according to any one of claims 1 to 4,
**characterised in that**
the forward saw blade guide (5) is capable of being pivoted away from the saw blade (1) by means of a hinge (8), the pivot axis of the hinge (8) being displaceable by means of an eccentric bearing in order to adjust the spacing between the rear and forward saw blade guides (4, 5) to match different thicknesses of saw blade (1).

6. Circular saw machine according to claim 5,
**characterised in that**
the forward saw blade guide (5) is, at a point spaced apart from the hinge (8) and next to the saw blade (1), joined by way of a spacer piece (9) to the rear saw blade guide (4) or to a holding device (10) rigidly constructed relative thereto, the spacer piece (9) being exchangeable or adjustable.

7. Circular saw machine according to claim 6,
**characterised in that**
the spacer piece (9) is so configured that, according to its installed orientation, it creates a predetermined relatively wide or relatively narrow spacing between the forward and rear saw blade guides (4, 5).

## Revendications

1. Scie circulaire comprenant une lame de scie (1) et un arbre d'entraînement (2) pour la lame de scie (1), ainsi qu'au moins un guide de lame arrière (4) et au moins un guide de lame avant (5) pour les deux faces latérales de la lame de scie (1), sachant que les guides de lame (4, 5) présentent chacun au moins une surface de contact (6) à appliquer contre la face latérale respective de la lame de scie (1), et sachant que le guide de lame avant (5) peut être déposé de la lame de scie (1) ou en être éloigné par pivotement, et que la lame de scie (1) elle-même est montée avec possibilité de remplacement,
**caractérisée en ce que** la lame de scie (1) conjointement avec l'arbre d'entraînement (2) est montée, pour le processus de sciage, avec possibilité de déplacement en avant et en arrière dans le plan de rotation, et **en ce que** la distance radiale entre les surfaces de contact (6) des guides de lame (4, 5) et l'arbre d'entraînement (2) peut être chaque fois modifiée, par le fait
a) que le guide de lame avant (5) peut être sélectionné parmi plusieurs plaques interchangeables présentant des distances différentes entre les surfaces de contact (6) et l'arbre d'entraînement (2), ou
b) qu'au moins une surface de contact (6) d'au moins un guide de lame (4, 5) est installée sur le guide de lame (4, 5) sur un support (12) qui peut être pivoté parallèlement au plan de la lame de scie et immobilisé dans des angles de pivotement prédéfinis.

2. Scie circulaire selon la revendication 1, **caractérisée en ce que** la distance entre le guide de lame arrière (4) et le guide de lame avant (5) est réglable afin de s'adapter à des épaisseurs différentes de la lame de scie (1).

3. Scie circulaire selon l'alternative a) de la revendication 1 ou selon la revendication 2, **caractérisée en ce que** le guide de lame arrière (4) peut être lui aussi sélectionné au moins pour partie parmi plusieurs plaques interchangeables présentant des distances différentes entre les surfaces de contact (6) et l'arbre d'entraînement (2).

4. Scie circulaire selon l'alternative b) de la revendication 1 ou selon la revendication 2, **caractérisée en ce que** la distance radiale par rapport à l'arbre d'entraînement (2) des surfaces de contact (6) sur le guide de lame arrière (4) est modifiable.

5. Scie circulaire selon l'une des revendications 1 à 4, **caractérisée en ce que** le guide de lame avant (5) peut être éloigné par pivotement de la lame de scie (1) au moyen d'une charnière (8), sachant que l'axe de pivotement de la charnière (8) peut être déplacé au moyen d'un palier de montage excentrique, afin de régler la distance entre le guide de lame arrière (4) et le guide de lame avant (5) pour s'adapter à des épaisseurs différentes de la lame de scie (1).

6. Scie circulaire selon la revendication 5, **caractérisée en ce que** le guide de lame avant (5), en un point distant de la charnière (8) à côté de la lame de scie (1), est relié par l'intermédiaire d'un écarteur (9) au guide de lame arrière (4) ou à un dispositif de maintien réalisé rigide par rapport à ce dernier, sachant que l'écarteur (9) est interchangeable ou réglable.

7. Scie circulaire selon la revendication 6, **caractérisée en ce que** l'écarteur (9) est conçu de telle sorte que, selon son orientation d'installation, il produit une distance prédéterminée plus ou moins grande entre le guide de lame arrière (4) et le guide de lame avant (5).
